# EUROPÄISCHE PATENTANMELDUNG

(11) **EP 4 147 614 A1**
(43) Veröffentlichungstag der Anmeldung: **15.03.2023**
(21) Anmeldenummer: 22194536.3
(22) Anmeldetag: 08.09.2022
(51) Int. Cl.: A47J 31/44

(54) **HALTEVORRICHTUNG ZUR HALTERUNG VON GEGENSTÄNDEN SOWIE ANORDNUNG UMFASSEND EINE HALTEVORRICHTUNG UND EINEN GEGENSTAND**

(30) Priorität: 09.09.2021 DE 102021123393
(71) Anmelder: Wiedemann, Nico, 88255 Baienfurt (DE)
(72) Erfinder: Wiedemann, Nico, 88255 Baienfurt (DE)
(74) Vertreter: Stork Bamberger Patentanwälte PartmbB

(57) **Zusammenfassung**

Die vorliegende Erfindung betrifft eine Haltevorrichtung (10) zur Halterung von Gegenständen (11), insbesondere von Siebträgern (11) von Espressomaschinen, wobei der Gegenstand (11) einen eine Kavität aufweisenden Aufnahmeraum (12) mit einem Aufnahmeboden (13) und mindestens eine den Aufnahmeboden (13) umlaufende Seitenwand (14) mit mindestens einer Rastausnehmung (15) umfasst, wobei die Haltevorrichtung (10) ein Trägerelement (16) mit mindestens einem Fixierelement (17) umfasst, ausgebildet und eingerichtet in die mindestens eine Rastausnehmung (15) des Aufnahmeraums (12) lösbar einzugreifen, um den Gegenstand (11) an dem Trägerelement (16) lösbar anzuordnen.

## Beschreibung

Die vorliegende Erfindung betrifft eine Haltevorrichtung zur Halterung von Gegenständen, insbesondere von Siebträgern von Espressomaschinen, wobei der Gegenstand einen eine Kavität aufweisenden Aufnahmeraum mit einem Aufnahmeboden und mindestens eine den Aufnahmeboden umlaufende Seitenwand mit mindestens einer Rastausnehmung umfasst.

Des Weiteren betrifft die Erfindung eine Anordnung umfassend eine Haltevorrichtung und einen Gegenstand, insbesondere einen Siebträger von Espressomaschinen, wobei der Gegenstand einen eine Kavität aufweisenden Aufnahmeraum mit einem Aufnahmeboden und mindestens eine den Aufnahmeboden umlaufende Seitenwand mit mindestens einer Rastausnehmung umfasst, wobei der Gegenstand zum Herstellen einer lösbaren Verbindung mit der Haltevorrichtung ausgebildet und eingerichtet ist.

Haltevorrichtungen zur Halterung von Gegenständen sind seit vielen Jahren aus dem Stand der Technik bekannt und dienen einerseits der Aufbewahrung und Ordnung der entsprechenden Gegenstände und andererseits sollen diese wiederum eine zuverlässige und komfortable Entnahme der Gegenstände ermöglichen.

In den vergangenen Jahren hat sich die Kaffeekultur stark verändert. Mittlerweile existieren eine Vielzahl an Kaffeebars und Cafes mit professionellen Espressomaschinen, die zur Zubereitung der Kaffeegetränke Siebträger zur Aufnahme des gemahlenen Kaffees aufweisen. Weiterhin finden sich nun auch vermehrt in Haushalten von Endverbrauchern Espressomaschinen, bei denen eine Kaffeezubereitung mittels Siebträgern erfolgt. Derartige Espressomaschinen sind auch unter dem Begriff Siebträgermaschinen bekannt und synonym zu verstehen.

Siebträger, die auch als Filterträger bezeichnet werden, weisen im Allgemeinen einen Aufnahmeraum zur Aufnahme des gemahlenen Espressos bzw. Kaffees auf, durch den im eingesetzten Zustand in der Brühgruppe der Espressomaschinen das Wasser unter Druckbeaufschlagung hindurchgeführt wird. In dem Aufnahmeraum findet sich in der Regel ein Sieb bzw. ein Filter, in das bzw. in den der gemahlene Espresso bzw. Kaffee eingefüllt wird. Für unterschiedliche Kaffeesorten, Röstungen, Mahlgrade der Kaffeebohnen oder Kaffeemengen eignen sich für eine optimale Zubereitung des gewünschten Kaffeegetränks jeweils unterschiedliche Siebe bzw. Siebeinsätze, die jedoch regelmäßig aufgrund der einfacheren Handhabung in dem Siebträger verbleiben. Es ist somit üblich, dass für eine (Siebträger-)Espressomaschinen eine Mehrzahl an Siebträgern vorliegen, die jedoch nicht zeitgleich benötigt werden.

Insgesamt erfordern Siebträger einen nicht zu vernachlässigen Platzbedarf und können Abmessungen von bis zu 30 cm sowie ein Gewicht von über 1 kg aufweisen. Durch herunterfallende Siebträger bieten diese darüber hinaus ein nicht zu vernachlässigendes Gefahrenpotential, wodurch es regelmäßig zu Beschädigungen am Mobiliar, dem Boden oder zu Verletzungen der Bedienpersonen kommt. Es muss somit eine sichere und zuverlässige Aufbewahrung während der Nichtnutzung der Siebträger gewährleistet sein. Derzeit liegen aus Mangel an Alternativen bei den meisten Anwendern von Espressomaschinen bzw. Siebträgermaschinen ungenutzte Siebträger neben oder auf der Maschine sowie an separaten Orten in der Nähe, wodurch diese neben dem erwähnten Gefahrenpotential auch einen Störfaktur im Küchenbereich und bei der Zubereitung der Kaffeegetränke darstellen. Sofern die nicht im Gebrauch befindlichen Siebträger auf der Maschine liegen, werden diese zwar erwärmt, was vorteilhaft bei der Kaffeezubereitung sein kann, allerdings befindet sich dort üblicherweise auch Geschirr für die Kaffeezubereitungen, das durch die Wärmeabstrahlung der Maschine präferiert vorgewärmt werden soll. Zur Aufbewahrung und Ordnung der Siebträger können daher beispielsweise Haltevorrichtungen vorgesehen sein, um eine Halterung von Siebträgern oder Filterträgern außerhalb der Espressomaschine zu ermöglichen, wenn diese nicht in der Brühgruppe eingesetzt sind.

Aus der DE 20 2010 007 436 U1 ist eine Siebträgerhalterung bekannt, bei der die Form der Siebträgerhalterung für einen Siebträger gefertigt ist, indem formgenaue hakenförmige Stege eine Aufnahme bereitstellen sollen, wodurch wiederum ein Herunterfallen verhindert werden soll. Die Siebträgerhalterung eignet sich allerdings nur für speziell gestaltete Siebträger mit einer spezifischen Außengeometrie. Darüber hinaus ist der Steg sehr klein gewählt, wodurch eine geringe Auflagefläche erzeugt wird, was einerseits nur ein unsicheres Befestigen darstellt und andererseits den Vorgang des Anordnens erschwert. Zudem bietet die Gestaltung der Siebträgerhalterung aufgrund der erforderlichen scharfkantigen, hakenförmigen Stege ein Verletzungspotential, die jedoch für eine Halterung benötigt werden. Aus gestalterischen Gesichtspunkten sind derartige Siebträgerhalterungen zudem unbefriedigend, da ein relativ großer Platz- und Materialbedarf erforderlich ist.

Es gibt weitere hakenförmige Halterungen, bei denen die Aufnahmebereiche für den Siebträger im Wesentlichen jeweils der speziellen Außenkontur der Siebträger von einzelnen Herstellern entsprechen. Der hakenförmige Aufnahmebereich stellt dabei die Negativform des Siebträgerkopfes dar. Zur Halterung der Siebträger werden diese mit dem Siebträgerkopf in die hakenförmige Ausgestaltung eingehängt, wodurch eine hängende Anordnung bereitgestellt werden soll. Die einzelnen Halterungen eignen sich dabei jeweils nur für Siebträger von spezifischen Herstellern, da die Dimensionen des Schaftes oder des Siebträgerkopfes deutlich zwischen den unterschiedlichen Herstellern variieren. Ferner bieten derartige Halterungen zur hängenden Anordnung nur einen unzureichenden Schutz vor einem unerwünschten Lösen des Siebträgers von der Halterung, was beispielsweise durch unvermeidbare Berührungen des Siebträgers in der Halterung oder durch unsachgemäße Anordnungen auf der Halterung auftreten kann.

Die DE 20 2014 002 067 U1 zeigt ein modulares Ordnungssystem zur Aufbewahrung magnetischer und nichtmagnetischer Gegenstände, in das beispielsweise eine Wandhalterung für Siebträger angeordnet werden kann. Derartige Wandhalterungen für Siebträger weisen Ausnehmungen auf, in die die Siebträger mit dem Bereich zwischen Griff und Siebträgerkopf eingehängt werden können. Die Halterungen eignen sich nur für spezielle Siebträger ausgewählter Hersteller und zudem ist eine sichere Anordnung ebenfalls nicht gewährleistet, da die Siebträger in der Ausnehmung nur lose anordenbar sind. Die lose Anordnung führt zu einem Verrutschen und einem Herausfallen des Siebträgers bei einfachen, unvermeidbaren Berührungen im Hausgebrauch.

Neben der unzureichenden und unsicheren Halterungsmöglichkeit der Siebträger durch die bekannten Haltevorrichtungen erfordern diese regelmäßig einen hohen Platz- und Materialbedarf, da derartige Halterungen jeweils die Außenkontur des Siebträgerkopfes bzw. daran angrenzende Bauteile abbilden. Ferner sind die bekannten Haltevorrichtungen aus ästhetischen Gesichtspunkten nicht zufriedenstellend.

Es ist daher Aufgabe der vorliegenden Erfindung eine Haltevorrichtung für Gegenstände, insbesondere Siebträger, bereitzustellen, der einerseits für eine Mehrzahl an unterschiedlichen Gegenständen verschiedener Hersteller geeignet ist und andererseits eine zuverlässige und einfache Verstaumöglichkeit der Gegenstände an der Haltevorrichtung gewährleistet.

Diese Aufgabe wird durch die eingangs genannte Haltevorrichtung dadurch gelöst, dass die Haltevorrichtung ein Trägerelement mit mindestens einem Fixierelement umfasst, ausgebildet und eingerichtet in die mindestens eine Rastausnehmung des Aufnahmeraums lösbar einzugreifen, um den Gegenstand an dem Trägerelement lösbar anzuordnen.

Durch die erfindungsgemäße Haltevorrichtung wird sichergestellt, dass die Gegenstände auf eine überraschend einfache und dennoch sichere Art und Weise mittels des mindestens einen Fixierelements an dem Trägerelements angeordnet werden können. Das mindestens eine Fixierelement ermöglicht einen Eingriff in die mindestens eine Rastausnehmung des Aufnahmeraums, wodurch der Gegenstand zuverlässig gehaltert wird. Im Gegensatz zum bekannten Stand der Technik zur Halterung von Gegenständen, insbesondere von Siebträgern, ist ein gänzlich unterschiedlicher Ansatz der Halterung gewählt. Bei den bekannten Siebträgerhalterungen wird eine hängende Anordnung bereitgestellt, indem der Siebträgerkopf oder daran angrenzende Bereiche auf Teilen der Siebträgerhalterung aufliegen. Die erfindungsgemäße Haltevorrichtung erzeugt hingegen die Haltewirkung im Wesentlichen durch das mindestens eine Fixierelement, das in die mindestens eine Rastausnehmung des Aufnahmeraums eingreift. Auf diese Weise wird der Aufnahmeraum des Gegenstandes von innen mittels des mindestens einen Fixierelements gehalten, wodurch ein Aufliegen mit der Außenkontur des Gegenstandes bzw. mit dem Gegenstand nicht gegeben ist und die Fixierung über ein loses Aufliegen hinausgeht. Durch die innenliegende Anordnung treten keine Beschädigungen oder Gebrauchsspuren bei der Außenkontur des Siebträgers auf. Die Anordnung des Gegenstandes auf der erfindungsgemäßen Haltevorrichtung erfolgt vorzugsweise indem der Gegenstand mit dem Aufnahmeraum auf das Trägerelement unter Ausbildung einer geringen Krafteinwirkung aufgelegt wird, wodurch das mindestens eine Fixierelement in die mindestens eine Rastausnehmung lösbar eingreift. Die geringe Krafteinwirkung muss ausreichend groß gewählt sein, damit das mindestens eine Fixierelement in der mindestens einen Rastausnehmung anordenbar ist. Das mindestens eine Fixierelement verbleibt unter Ausbildung der Haltewirkung in der mindestens einen Rastausnehmung, wodurch der Gegenstand vor einem unerwünschten, selbsttätigen Lösen gesichert ist.

Im Gegensatz zur Außenkontur derartiger Gegenstände, insbesondere Siebträger, ist der Aufnahmeraum in der Regel einheitlich gewählt, indem vorzugsweise der Aufnahmeraum durch Siebe bzw. Siebeinsätze gebildet ist, deren Dimensionen bei den führenden Herstellern identisch sind. Die Ausbildung der Halterung über den Aufnahmeraum mittels des mindestens einen Fixierelements ermöglicht somit die Nutzung einer einzigen Haltevorrichtung für Gegenstände von einer Vielzahl an Herstellern. Auf diese Weise ist gewährleistet, dass unabhängig von der Ausbildung der äußeren Form des Gegenstandes eine einfache, einheitliche und sichere Halterung bereitgestellt wird.

Unter "Gegenstand" im Sinne der Erfindung sind sämtliche Gegenstände zu verstehen, die zumindest einen, eine Kavität aufweisenden Aufnahmeraum mit einem Aufnahmeboden und mindestens eine den Aufnahmeboden umlaufende Seitenwand mit mindestens einer Rastausnehmung umfassen. Unter "Gegenstand" fallen insbesondere Siebträger, die auch unter dem Begriff Filterträger bekannt sind. In die Siebträger können vorzugsweise unterschiedliche Siebe, auch unter den Begriffen Filter, Siebeinsatz, Filtereinsatz bekannt, eingesetzt werden, die besonders bevorzugt den Aufnahmeraum bilden. In einer bevorzugten Ausführungsform ist der "Gegenstand" passend für eine sogenannte "E61 Brühgruppe" ausgebildet. Grundsätzlich ist der "Gegenstand" nicht auf einen Siebträger beschränkt, es sind viel mehr weitere Gegenstände zur Anordnung in der Haltevorrichtung denkbar, die zumindest einen Aufnahmeraum im Sinne der Erfindung umfassen.

Der "Aufnahmeraum" im Sinne der Erfindung ist vorzugsweise jedoch ein Teilelement des Siebträgers, insbesondere des Siebträgerkopfes, der in der Brühgruppe von Espressomaschinen angebracht wird, und umfasst weiter bevorzugt einen Siebeinsatz bzw. wird zumindest teilweise durch den Siebeinsatz gebildet. Derartige Siebeinsätze umfassen vorzugsweise einen Boden, eine umlaufende Seitenwand und mindestens eine Ausnehmung in der Seitenwand. Siebeinsätze werden in der Regel in den Siebträgerkopf von Siebträgern lösbar eingesetzt, wobei diese vorzugsweise gegen ein ungewolltes Lösen in dem Siebträgerkopf gesichert und zur Aufnahme von gemahlenem Kaffee ausgebildet sind. In dem Aufnahmeraum, insbesondere in dem Aufnahmeboden, können vorzugsweise Durchbrechungen, insbesondere eine Vielzahl an Löchern, vorgesehen sein, um ein Hindurchführen von Wasser während der Kaffeezubereitung zu ermöglichen.

Die mindestens eine "Rastausnehmung" kann grundsätzlich in jeglicher Dimensionierung und Ausgestaltung in dem Gegenstand bzw. dem Aufnahmeraum vorliegen, es ist allerdings erforderlich, dass ein Eingriff mit zumindest einem Fixiermittel ausbildbar ist. Unter "Eingriff" ist dabei zu verstehen, dass eine lösbare Verbindung zwischen dem mindestens einen Fixiermittel und der mindestens einen Rastausnehmung gegeben ist. Das mindestens eine "Fixiermittel" kann ebenfalls grundsätzlich in jeglicher Dimensionierung und Ausgestaltung vorliegen, wobei ein lösbarer Eingriff mindestens einer Rastausnehmung gegeben sein muss, um eine Halterung des Gegenstandes mittels der Haltevorrichtung auszubilden. Dazu wird vorzugsweise das mindestens eine Fixiermittel in die mindestens eine Rastausnehmung eingeführt und zumindest teilweise in der mindestens einen Rastausnehmung innenliegend angeordnet. Auf diese Weise wird weiter bevorzugt eine Rastverbindung erstellt, um ein selbsttätiges Lösen des Gegenstandes zu verhindern. Vorzugsweise ist dieser Vorgang auf dieselbe Art und Weise reversibel ausbildbar. Das mindestens eine Fixiermittel kann in einer bevorzugten Ausführungsform ein wulstartiger Abschnitt des Trägerelements, d. h. ein lokaler Materialüberschuss, sein, der in mindestens eine Rastausnehmung eingreifbar ausgebildet und eingerichtet ist.

Eine weitere bevorzugte Ausführungsform ist dadurch gekennzeichnet, dass das mindestens eine Fixierelement einen Arretierabschnitt umfasst, der beim lösbaren Eingriff in der mindestens einen Rastausnehmung anliegt. Durch den Arretierabschnitt ist ein definierter Bereich des Fixierelements gegeben, der für einen Eingriff mit der mindestens einen Rastausnehmung vorgesehen und ausgebildet ist. Der Arretierabschnitt kann dafür beispielsweise mit geeigneten Materialien, konstruktiven Merkmalen oder mechanischen Eigenschaften an die jeweilige einzugreifende Rastausnehmung angepasst sein, um eine Halterung des Gegenstandes an der Haltevorrichtung zu ermöglichen.

Eine vorteilhafte Weiterbildung zeichnet sich dadurch aus, dass das mindestens eine Fixierelement ein Federelement umfasst, das den Arretierabschnitt federnd lagert, wobei der Arretierabschnitt gegen eine Federkraft vorgespannt ist. Auf diese Weise ist ein zuverlässiger und sicherer Eingriff des mindestens einen Fixierelements in die mindestens eine Rastausnehmung möglich. Durch die Federvorspannung wird bei einer Betätigung des Federelements, was vorzugsweise beim Eingriff des Fixierelements in die Rastausnehmung erfolgt, selbsttätig die Fixierung bei der anschließenden Entspannung ausgebildet und eingerichtet. Der Arretierabschnitt kann in der Längsausdehnung an die jeweilige Rastausnehmung angepasst werden, um einen sicheren Sitz auszubilden. Dies erhöht weiter die komfortable Nutzung der erfindungsgemäßen Haltevorrichtung, da hiermit das Fixierelement zuverlässig und einfach in mindestens eine Rastausnehmung einführbar ist, so dass eine sichere Halterung des Gegenstandes erfolgt. Der Anwender der Haltevorrichtung muss nicht eigenständig darauf achten, dass das jeweilige Fixierelement korrekt in der Rastausnehmung anliegt, da aufgrund der Federvorspannung automatisch ein gewünschter Sitz herbeigeführt wird. Dies beugt zudem einer unsachgemäßen Verwendung der Haltevorrichtung vor und ermöglicht einen sicheren Einsatz. Vereinfacht gesagt, erfolgt die Anordnung des Fixierelements in der Rastausnehmung ohne relevantes Zutun des Anwenders, sofern der Gegenstand auf dem Trägerelement angeordnet wird, was die Akzeptanz und die Verwendung für den sicheren Einsatz erhöht. Als Federelemente kommen beispielsweise bekannte mechanische oder auch hydraulische Federelemente in Betracht, wobei als Federelemente besonders bevorzugt Druckfedern vorgesehen sind.

In einer weiteren vorteilhaften Ausgestaltung der Erfindung ist das Trägerelement innenliegend in dem Aufnahmeraum des Gegenstandes anordenbar, vorzugsweise vollständig innenliegend in dem Aufnahmeraum anordenbar. Die innenliegende Anordnung des Trägerelements ermöglicht eine Halterung des Gegenstandes unter Bildung des Eingriffs des mindestens einen Fixierelements mit mindestens einer Rastausnehmung. Im gehalterten Zustand befindet sich somit das mindestens eine eingreifende Fixierelemente innerhalb des Aufnahmeraums und eine Manipulation oder ein unerwünschtes Lösen des mindestens einen Fixierelements wird erschwert bzw. ist nicht möglich. Zudem ist eine optische Besonderheit gegeben, da auf diese Weise der Eindruck erweckt wird, als werde der Gegenstand im eingehängten bzw. im angeordneten Zustand komplett eigenständig gehalten, da keine Elemente oder Mittel von außen zur Halterung ersichtlich sind.

Eine zweckmäßige Ausgestaltung der Erfindung ist dadurch gekennzeichnet, dass das Trägerelement korrespondierend zu dem Aufnahmeraum des Gegenstandes ausgebildet und eingerichtet ist, wobei die Grundfläche des Trägerelements im Wesentlichen der Fläche der Öffnung der Kavität des Aufnahmeraums entspricht. Durch die korrespondierende Ausbildung und Einrichtung ist eine zuverlässige innenliegende Anordnung des Trägerelements in dem Aufnahmeraum möglich, wodurch der Gegenstand möglichst unabhängig von Verschwenkungen auf der Haltevorrichtung verbleibt. "Korrespondierend" bedeutet in diesem Zusammenhang, dass die Grundfläche des Trägerelements im Wesentlichen der Größe der Öffnung des Aufnahmeraums entspricht, wobei das Trägerelement eine zumindest geringfügig geringere Dimensionierung aufweist, um die Anordnung zu erleichtern. Die korrespondierende Ausbildung erleichtert den Eingriff des mindestens einen Fixierelements in die mindestens eine Rastausnehmung, da der Abstand zwischen Fixierelement und Rastausnehmung auf diese Weise möglichst gering ist und der Eingriff zuverlässig möglich ist. Das Trägerelement und/oder der Aufnahmeraum sind vorzugsweise rund ausgebildet. Besonders bevorzugt entspricht das Trägerelement im Wesentlichen in der Höhe der Tiefe des Aufnahmeraums. In einer weiteren bevorzugten Ausführungsform entspricht das Trägerelement im Wesentlichen in den Abmessungen dem Innenraum des Aufnahmeraums, wobei das Trägerelement eine zumindest geringfügig geringere Dimensionierung aufweist, um die Anordnung zu erleichtern.

Eine weitere bevorzugten Ausführungsform der Erfindung ist dadurch gekennzeichnet, dass das Trägerelement puckförmig ausgebildet ist, wobei das Trägerelement eine Oberseite, eine Unterseite und eine umlaufende Seitenwand aufweist, wobei das mindestens eine Fixierelement in der Seitenwand des Trägerelement angeordnet ist.

Dies erhöht weiter die zuverlässige Anordnung des Trägerelements, da das Trägerelement somit im Wesentlichen dem Innenraum eines kreisförmigen Aufnahmeraums entspricht, wie es beispielsweise bei Siebträgern üblich ist. Puckförmig ist auch alternativ als scheibenförmig, tortenförmig oder dergleichen bezeichnet. Vorzugsweise ist in der umlaufenden Seitenwand des Trägerelements mindestens eine Ausnehmung, beispielsweise eine Bohrung, vorgesehen, in die jeweils eines der Fixierelemente anordenbar ist.

Eine bevorzugte Weiterbildung der Erfindung zeichnet sich dadurch aus, dass das Trägerelement mindestens drei Fixierelemente umfasst, vorzugsweise sternförmig in der Seitenwand des Trägerelements angeordnet. Dies erhöht die Halteeigenschaft bzw. Fixiereigenschaft der Haltevorrichtung, da durch mindestens drei Fixierelemente regelmäßig eine zuverlässige Halterung gewährleistet ist. Je nach gewähltem Fixierelement können allerdings auch mehrere oder weniger Fixierelemente zweckdienlich sein. Unter einer sternförmigen Anordnung in der Seitenwand ist zu verstehen, dass die Fixierelemente im Wesentlichen gleichmäßig voneinander beabstandet über den Umfang der Seitenwand angeordnet sind. In weiteren zweckmäßigen Ausführungsformen umfasst die Haltevorrichtung mehr als drei Fixierelemente, insbesondere fünf oder sieben Fixierelemente, wobei diese vorzugsweise symmetrisch angeordnet sind, um eine möglichst einheitliche Fixierwirkung auszubilden und einzurichten.

Eine weitere zweckmäßige Ausgestaltung der Erfindung ist dadurch gekennzeichnet, dass das mindestens eine Fixierelement derart in der Seitenwand angeordnet ist, dass der Arretierabschnitt über die Oberfläche der Seitenwand hinausragt. Durch das Hinausragen des Arretierabschnitts über die Oberfläche der Seitenwand wird ein Vorsprung durch das Fixierelement erzeugt, der je nach Ausgestaltung des Trägerelements oder des Aufnahmeraums komfortabel in die Rastausnehmung eingreift und eine Fixierung bereitstellt. In Verbindung mit dem bevorzugten Federelement kann die Rastwirkung zum gewünschten Zeitpunkt und an der gewünschten Stelle bereitgestellt werden, indem der hinausragende Arretierabschnitt besonders bevorzugt in Richtung der Seitenwand verschiebbar ausgebildet und eingerichtet ist und entsprechend in die Rastausnehmung eingreift. Die Seitenwand des Trägerelements kann darüber hinaus in einer bevorzugten Ausführungsform in Richtung der Oberfläche des Trägerelements verjüngend und/oder abgerundet ausgebildet sein, was zu einer unterstützenden Anordnung des Gegenstandes auf der Haltevorrichtung führt.

Eine zweckmäßige Ausgestaltung der Erfindung ist dadurch gekennzeichnet, dass die Haltevorrichtung ein Grundelement umfasst, das zur Befestigung mit dem Trägerelement ausgebildet und eingerichtet ist. Das Grundelement dient der Positionierung bzw. Anordnung des Trägerelements und kann vorzugsweise auch zur Beabstandung zwischen Trägerelement und dem Zielort sowie als Designelement fungieren. Weiterhin können in bevorzugten Ausführungsformen weitere Funktionen durch das Grundelement bereitgestellt werden, indem beispielsweise weitere Bauteile zur Licht-, Wärme- oder Geräuscherzeugung vorgesehen sind. Vorzugsweise ist das Grundelement und/oder das Trägerelement überwiegend aus einem nachhaltigen, lebensmittelechten und/oder dauerhaften Material gefertigt. Besonders bevorzugt besteht das Grundelement und/oder das Trägerelement überwiegend aus Holz oder einem Metall bzw. einer Metalllegierung, insbesondere Aluminium, Messing, Kupfer oder Stahl. In einer weiteren zweckmäßigen Ausführungsform ist das Grundelement und/oder das Trägerelement zumindest überwiegend aus einem Kunststoff gebildet, insbesondere aus einem thermoplastischen Kunststoff.

Eine vorteilhafte Weiterbildung zeichnet sich dadurch aus, dass die Befestigung zwischen dem Grundelement und dem Trägerelement mittels einer lösbaren und/oder einer nicht lösbaren Verbindung gebildet ist, vorzugsweise ausgewählt aus einer Magnetverbindung, wobei das Grundelement und/oder das Trägerelement einen Magneten umfasst, einer Schraubverbindung, einer Klebeverbindung, einer Nut-Feder-Verbindung, einer Klettverbindung und/oder einer stoffschlüssigen Verbindung. Dies sichert die Haltevorrichtung in der Position und ermöglicht einerseits eine sichere Handhabung während der Nutzung mit einem Gegenstand, insbesondere mit einem Siebträger, und andererseits wird auch eine Lösung für anderweitige und modulare anwendungsspezifische Verwendungsmöglichkeiten bereitgestellt. Sofern eine lösbare Verbindung gewählt ist, ist das Trägerelement beispielsweise bei einer Nichtnutzung von dem Grundelement entfernbar, so dass lediglich das Grundelement verbleibt, an dem beispielsweise unterschiedliche Elemente oder Gegenstände anordenbar sind. Die nicht lösbare Verbindung ist beispielsweise bei schweren Gegenständen bevorzugt, um eine zuverlässige Halterung bereitzustellen, wobei insbesondere stoffschlüssige Verbindungen vorgesehen sind. In einer besonders bevorzugten Ausführungsform ist eine lösbare Magnetverbindung vorgesehen, indem zumindest in dem Trägerelement ein Magnet angeordnet ist und das Grundelement zumindest teilweise ein ferromagnetisches Material umfasst, um das Trägerelement mit dem Magneten daran anzuordnen. In einer weiteren bevorzugten Ausführungsform umfasst das Trägerelement und das Grundelement jeweils ein Magnet. Die Magneten sind dabei vorzugsweise mit den Polen gegensätzlich zueinander angeordnet, so dass eine Anziehung zwischen Grundelement und Trägerelement gegeben ist.

In einer weiteren bevorzugten Weiterbildung der Erfindung ist die mindestens eine Rastausnehmung in der umlaufenden Seitenwand beabstandet von der Öffnung der Kavität kanalförmig ausgebildet und eingerichtet, wobei die kanalförmige Rastausnehmung vorzugsweise um den gesamten Umfang der Seitenwand verläuft, besonders bevorzugt im Wesentlichen parallel zum Aufnahmeboden. Auf diese Weise wird eine einfache Möglichkeit bereitgestellt, um unabhängig von der Anzahl an vorhandenen Fixierelementen einen zuverlässigen Eingriff innerhalb der Rastausnehmung bereitzustellen. Ferner ist bevorzugterweise eine Bewegung des mindestens einen Fixierelements innerhalb der kanalförmigen Rastausnehmung gegeben, wodurch eine Positionsänderung des Gegenstandes und/oder des Trägerelements ausführbar ist. Hierzu können vorzugsweise weitere Mittel kanalförmige Rastausnehmungen übereinander, d. h. parallel zueinander, vorgesehen sein, um Fixiermittel unterschiedlicher Trägerelemente, die beispielsweise Unterschiede in der Höhe aufweisen, zuverlässiger aufzunehmen.

In einer weiteren vorteilhaften Ausgestaltung der Erfindung greift bei der Anordnung des Gegenstandes auf dem Trägerelement das mindestens eine Fixierelement in die mindestens eine Rastausnehmung ein, wobei das mindestens eine Fixierelement eine Längenänderung erfährt, indem sich das Federelement ausgehend von der Öffnung der Kavität über die Seitenwand des Aufnahmeraums zusammendrückt und bei Eindringen in die mindestens eine Rastausnehmung entspannt. Dazu ist vorzugsweise die Positionierung des mindestens einen Fixierelements derart in dem Aufnahmeraum, dass sich zunächst das Fixierelement in der Längsausdehnung verkürzt und beim Eintritt in die Rastausnehmung verlängert, wobei der Vorgang besonders bevorzugt reversibel ist. Damit ist eine Arretierung des Gegenstandes auf der Haltevorrichtung gegeben und ein zuverlässiges Lösen kann auf einfache Art und Weise erfolgen.

Eine weitere zweckmäßige Ausgestaltung der Erfindung ist dadurch gekennzeichnet, dass das mindestens eine Fixierelement als ein Federdruckstück oder eine federnd gelagerte Kugel ausgebildet und eingerichtet ist, das oder die in die mindestens eine Rastausnehmung gedrückt wird. Die federnd gelagerte Kugel bietet eine komfortable Möglichkeit, das Fixierelement möglichst verschleiß- und widerstandsfrei in die Rastausnehmung einzuführen. Hierzu ist die Kugel vorzugsweise drehbar bzw. rotierbar in dem Fixierelement ausgebildet und eingerichtet. Bevorzugterweise ist der Arretierabschnitt zumindest teilweise als Kugel ausgebildet. Die Kugel kann mit einem geeigneten Befestigungsmittel mit dem Fixerelement derart befestigt sein, dass nur ein Bereich der Kugel als Arretierabschnitt zur Verfügung steht. Auf diese Weise ist ein zuverlässiges Arretieren und ein erneutes anschließendes Lösen des Gegenstandes von der Haltevorrichtung gegeben. Derartige Bauteile sind nahezu verschleißfrei und ermöglichen eine Vielzahl an Halterungs- und Lösevorgängen der Gegenstände auf der Haltevorrichtung bei gleichbleibender Haltewirkung durch die jeweiligen Bauteile.

Eine vorteilhafte Weiterbildung der Erfindung zeichnet sich dadurch aus, dass bei der Anordnung des Gegenstandes auf dem Trägerelement mittels des mindestens einen Fixierelements eine Haltekraft wirkt, wobei die Haltekraft geringer ist, als die auftretende Kraft bei der Befestigung zwischen dem Grundelement und dem Trägerelement. Durch den Kräfteunterschied steht eine ausreichende Haltekraft zwischen Grundelement und Trägerelement zur Verfügung, damit bei einem Lösen des Gegenstandes von dem Trägerelement die Verbindung zwischen Trägerelement und Grundelement beibehalten wird. Die Haltekraft zwischen Grundelement und Trägerelement ist weiter bevorzugt größer, als die bei der Anordnung des Gegenstandes auf dem Trägerelement auftretende Gewichtskraft, wobei die Haltekraft je nach zu verwendendem Gegenstand angepasst sein kann. Vorzugsweise wird die Haltekraft zwischen Grundelement und Trägerelement mittels Magneten erzeugt, die in dem Grundelement und/oder dem Trägerelement angeordnet sind, wobei jeweils ein ferromagnetisches Material vorgesehen ist. Besonders bevorzugt befindet sich sowohl in dem Grundelement als auch in dem Trägerelement jeweils ein Magnet, wobei diese vorzugsweise mit den Polen gegensätzlich zueinander angeordnet sind, um eine entsprechende Anziehung auszubilden.

Eine weitere zweckmäßige Ausgestaltung der Erfindung ist dadurch gekennzeichnet, dass das Trägerelement bei der Anordnung auf dem Grundelement relativ zum Grundelement verschwenkbar befestigt angeordnet ist. Damit ist ein breiter Einsatzzweck des der Haltevorrichtung gegeben, wodurch insbesondere je nach Anordnung der Haltevorrichtung eine gewünschte Positionierung des Gegenstandes möglich ist. Vorzugsweise ist bei einer waagrechten Ausrichtung des Trägerelements eine Rotation des Gegenstandes um die Drehachse des Trägerelements ausführbar.

Die Aufgabe wird auch durch eine Anordnung der eingangs genannten Art gelöst, wobei die Haltevorrichtung nach einem oder mehreren der Ansprüche 1 bis 15 ausgebildet ist. Eine derartige Anordnung ermöglicht insbesondere eine einfache und zuverlässige Möglichkeit den Gegenstand mit der Haltevorrichtung zu verbinden, um einerseits eine platzsparende Verstauung bereitzustellen und andererseits ein sicheres Arbeitsumfeld zu schaffen.

Zur Vermeidung von Wiederholungen wird im Zusammenhang mit der erfindungsgemäßen Anordnung auf die bereits im Zusammenhang mit der erfindungsgemäßen Haltevorrichtung im Detail geschilderten Vorzüge verwiesen. Diese gelten in analoger Weise auch für die angegebene erfindungsgemäße Anordnung.

Weitere zweckmäßige und/oder vorteilhafte Merkmale und Weiterbildungen sowie bevorzugte Vorrichtungsgegenstände ergeben sich aus den Unteransprüchen und der Beschreibung. Besonders bevorzugte Ausführungsformen der Haltevorrichtung sowie der Anordnung werden anhand der beigefügten Zeichnungen näher erläutert. In den Zeichnungen zeigen:
- Fig. 1: eine schematische Darstellung eines in einer erfindungsgemäßen Haltevorrichtung angeordneten Gegenstandes in der Vorderansicht mit eingezeichnetem Schnittverlauf A-A,
- Fig. 2a: eine Seitenansicht des in Fig. 1 gezeigten in der erfindungsgemäßen Haltevorrichtung angeordneten Gegenstandes in der Schnittdarstellung A-A,
- Fig. 2b: eine Detailansicht eines Teilbereichs des in Fig. 1 und Fig. 2a in der erfindungsgemäßen Haltevorrichtung angeordneten Gegenstandes in der Schnittdarstellung A-A,
- Fig. 3a: eine schematische Draufsicht eines Trägerelements,
- Fig. 3b: eine schematische Darstellung des in der Fig. 3a gezeigten Trägerelements in der Vorderansicht mit eingezeichnetem Schnittverlauf A-A,
- Fig. 3c: eine Draufsicht des in den Fig. 3a und Fig. 3b gezeigten Trägerelements in der Schnittdarstellung A-A,
- Fig. 4: eine schematische Darstellung eines Fixierelements,
- Fig. 5 und: eine schematische Seitenansicht einer erfindungsgemäßen Haltevorrichtung umfassend ein Grundelement und ein Trägerelement
- Fig. 6: eine schematische Schnittdarstellung in der Seitenansicht der erfindungsgemäßen Anordnung mit einer Haltevorrichtung und einem Gegenstand.

Anhand der vorgenannten Figuren wird die erfindungsgemäße Haltevorrichtung sowie die erfindungsgemäße Anordnung mit einer Haltevorrichtung und einem Gegenstand, insbesondere einem Siebträger, näher beschrieben.

Der in den Zeichnungen dargestellte Gegenstand ist exemplarisch als Siebträger bzw. Filterträger ausgebildet. Die Erfindung bezieht sich in gleicher Weise auf vergleichbare Gegenstände, insbesondere Küchengeräte, die einen Aufnahmeraum aufweisen und zur Anordnung auf einer erfindungsgemäßen Haltevorrichtung geeignet sind.

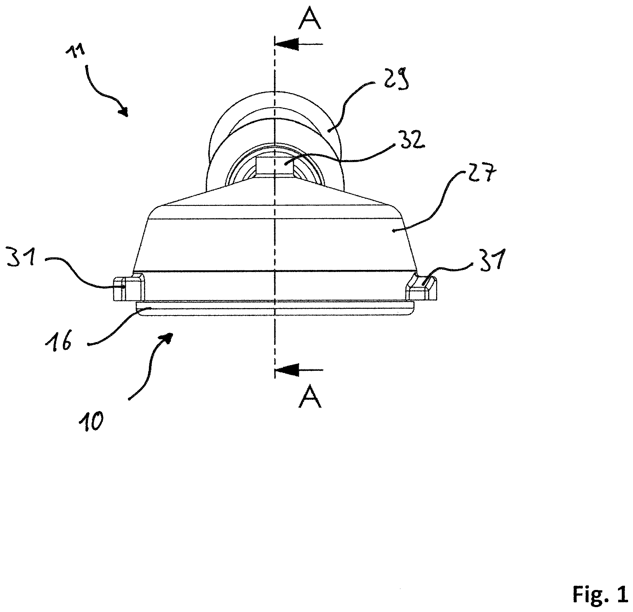

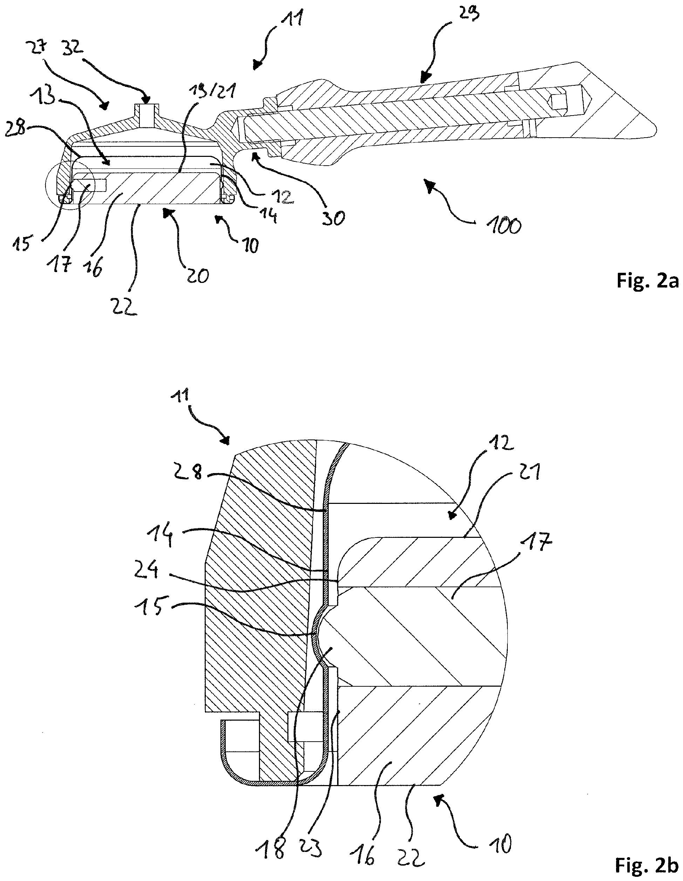

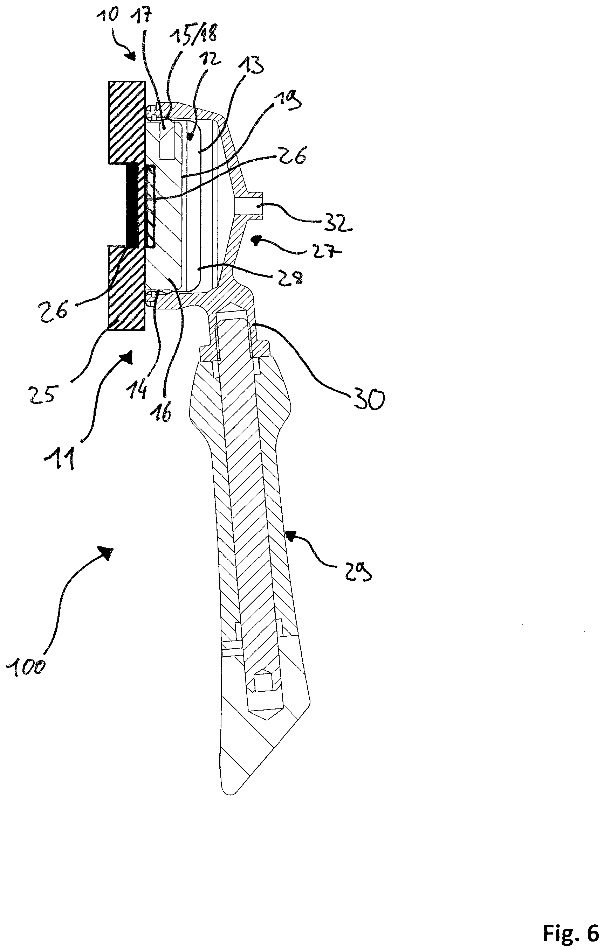

Fig. 1, Fig. 2a, Fig. 2b und Fig. 6 zeigen jeweils schematische Ausführungsformen einer Haltevorrichtung 10 zur Halterung von Gegenständen 11, wobei in den Figuren als Gegenstand 11 exemplarisch ein Siebträger 11 von - in den Figuren nicht gezeigten - Espressomaschinen bzw. Siebträgermaschinen dargestellt ist. Der Gegenstand 11 umfasst einen eine Kavität aufweisenden Aufnahmeraum 12 mit einem Aufnahmeboden 13 und mindestens eine den Aufnahmeboden 13 umlaufende Seitenwand 14 mit mindestens einer Rastausnehmung 15. Der Aufnahmeraum 12 des Gegenstandes 11 ist in den Fig. 1, Fig. 2a, Fig. 2b und Fig. 6 in einem Siebträgerkopf 27 des Siebträgers 11 angeordnet und ist zumindest teilweise als Siebelement 28 ausgebildet und eingerichtet. Derartige Siebträger 11 umfassen darüber hinaus üblicherweise einen Haltegriff 29, einen Übergang 30 zwischen Haltegriff 29 und Siebträgerkopf 27, mindestens ein Einsatzelement 31 zum Einsetzen des Siebträgers 10 in eine - in den Figuren nicht dargestellte - Espressomaschine bzw. Siebträgermaschine sowie mindestens eine Auslassöffnung 32 im Siebträgerkopf 27 zum Auslassen des aufgebrühten - in den Figuren nicht dargestellten - Kaffees bzw. Espressos. In den Ausführungsformen der Fig. 2a, Fig. 2b und Fig. 6 ist der Aufnahmeraum 12 durch das Siebelement 28 gebildet, das in eine Ausnehmung des Siebträgerkopfes 27 eingesetzt wird. Dabei umfasst das Siebelement 28 einen Aufnahmeboden 13 und mindestens eine den Aufnahmeboden 13 umlaufende Seitenwand 14 mit mindestens einer Rastausnehmung 15, wie es insbesondere aus der Fig. 2b sowie der Fig. 6 hervorgeht.

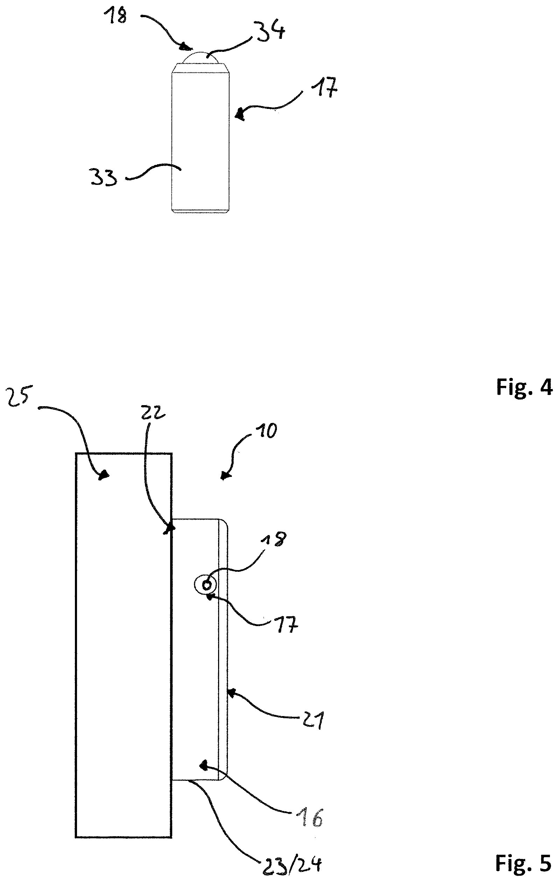

Die Haltevorrichtung 10 zeichnet sich erfindungsgemäß dadurch aus, dass die Haltevorrichtung 10 ein Trägerelement 16 mit mindestens einem Fixierelement 17 umfasst, ausgebildet und eingerichtet in die mindestens eine Rastausnehmung 15 des Aufnahmeraums 12 lösbar einzugreifen, um den Gegenstand 11 an dem Trägerelement 16 lösbar anzuordnen. In der Fig. 2a und Fig. 2b ist der Gegenstand 11 im Eingriff mit der Haltevorrichtung 10 dargestellt, indem das Fixierelement 17 in der Rastausnehmung 15 angeordnet ist, wie es insbesondere die Detailansicht der Fig. 2b zeigt. Durch die Anordnung des mindestens einen Fixierelements 17 in der mindestens einen Rastausnehmung 15 ist der Gegenstand 11 gegen ein selbsttätiges Lösen von der Haltevorrichtung 10 gesichert. Das mindestens eine Fixierelement 17 umfasst dabei bevorzugt einen Arretierabschnitt 18, der beim lösbaren Eingriff in der mindestens einen Rastausnehmung 15 anliegt. Der Arretierabschnitt 18 wird dabei durch einen vorderen Bereich des Fixierelements 17 gebildet, der entweder ein eigenständiges Bauteil des Fixierelements 17 sein kann oder als Teilbereich des Fixierelements 17 ausgebildet sein kann, beispielsweise durch eine abgrenzende Formgebung gekennzeichnet. Das Fixierelement 17 kann ein eigenständiges bzw. separates Bauteil des Trägerelements 17 oder kann als Teilstück eines einstückigen Trägerelements 12 ausgebildet sein. In der Fig. 4 ist ein separates Fixierelement 17gezeigt, welches sich außerhalb eines Trägerelements 16 befindet und aus einem Arretierabschnitt 18 und einem Fixierelementkörper 33 gebildet ist. Das mindestens eine Fixierelement 10 umfasst vorzugsweise ein - in den Figuren nicht im Detail dargestelltes - Federelement, das den Arretierabschnitt 18 federnd lagert, wobei der Arretierabschnitt 18 gegen eine Federkraft vorgespannt ist. Das Federelement ist weiter bevorzugt in dem Fixierelementgrundkörper 33 innenliegend angeordnet und besonders bevorzugt als Druckfeder ausgebildet. Der Arretierabschnitt 18 ist auf diese Weise durch Ausübung einer Kraft auf den Arretierabschnitt 18, die gemäß vorhandenem Federelement entsprechend ausreichend groß gewählt sein muss, in Richtung des Fixierelementgrundkörpers 33 bewegbar, wodurch die Länge des gesamten Fixierelements 17 verringerbar ist.

Vorzugsweise greift bei der Anordnung des Gegenstandes 11 bzw. des Siebträgers 11 auf dem Trägerelement 16 das mindestens eine Fixierelement 17 in die mindestens eine Rastausnehmung 15 ein, wobei das mindestens eine Fixierelement 17 eine Längenänderung erfährt, indem sich das Federelement ausgehend von der Öffnung 20 der Kavität über die Seitenwand 14 des Aufnahmeraums 12 zusammendrückt und bei Eindringen in die mindestens eine Rastausnehmung 15 entspannt. In den Fig. 2a, Fig. 2b und Fig. 6 ist der eingegriffene Zustand dargestellt. In der Fig. 2b ist im Detail gezeigt, wie der Arretierabschnitt 18 des Fixierelements 17 in der Rastausnehmung 15 anliegt bzw. eingreift. Um den Eingriff auszubilden wird beim Anlegen des Gegenstandes 11 auf das Trägerelement 16 ausgehend von dem Arretierabschnitt 18 eine entsprechende Kraft eingetragen, die größer ist als die Kraft des Federelements, um das Federelement entsprechend in Richtung des Fixierelementgrundkörpers 33 zu bewegen und um die Längenänderung des Fixierelements 17 auszubilden. Bei einem Lösen des Gegenstandes 11 von der Haltevorrichtung 10 erfolgt eine erneute Längenänderung, indem der Arretierabschnitt 18 wiederum unter Aufbringen einer entsprechenden Kraft gegen die Seitenwand 14 des Aufnahmeraums 12 aus der Rastausnehmung 15 führbar ist. Je nach gewünschter Haltewirkung durch das mindestens eine Fixierelement 17 kann die Federkraft des Federelements entsprechend ausgewählt sein, die entsprechend bei der Anordnung und beim Lösen durch den Anwender aufgebracht werden muss. Alternativ kann die Haltewirkung auch anhand des eingesetzten Materials des Fixierelements 17 / Arretierabschnitts 18 oder anhand der Passung zwischen Fixierelement 17 / Arretierabschnitt 18 und Rastausnehmung 15 einstellbar sein, wobei härtere Materialien (z. B. Metalle) und ein geringer Abstand zwischen Fixierelement 17 / Arretierabschnitt 18 und Rastausnehmung 15 in der Regel eine höhere Haltewirkung erzeugen und ein größerer Abstand und eine weichere Materialauswahl des Fixierelements 17 / Arretierabschnitt 18 in der Regel eine geringere Haltewirkung zwischen Fixierelement 17 / Arretierabschnitt 18 und Rastausnehmung 15 ausbilden.

Wie in der Fig. 4 dargestellt, ist das mindestens eine Fixierelement 17 vorzugsweise als ein Federdruckstück 17 oder eine federnd gelagerte Kugel 34 ausgebildet und eingerichtet, das oder die in die mindestens eine Rastausnehmung 15 unter Aufbringung eines Krafteintrags gedrückt bzw. geführt wird. Besonders bevorzugt besteht die Kugel 34 aus einem Metall, insbesondere aus einem Stahl.

Vorzugsweise bildet die Haltevorrichtung 10 beim Anordnen des Gegenstandes 11 auf der Haltevorrichtung 10 ein akustisches Signal aus. Besonders bevorzugt bildet das mindestens eine Fixierelement 17 ein akustisches Signal beim Anordnen in der Rastausnehmung 15 aus, um eine zuverlässige Anordnung des Gegenstandes 11 für den Anwender der Haltevorrichtung 10 aufzuzeigen.

In einer vorteilhaften Ausführungsform ist das Trägerelement 16 innenliegend in dem Aufnahmeraum 12 des Gegenstandes 11 anordenbar, vorzugsweise vollständig innenliegend in dem Aufnahmeraum 12 anordenbar. Die Fig. 1, Fig. 2a, Fig. 2b und Fig. 6 zeigen eine innenliegende Anordnung des Trägerelements 16 in dem Aufnahmeraum 12 des Gegenstandes 11, wobei das Trägerelement 16 vollständig innerhalb des Aufnahmeraums 12 angeordnet ist. Durch die innenliegende Anordnung bildet der Aufnahmeraum 12 mit dem Trägerelement 16 einen im Wesentlichen planen Abschluss, d. h. die beiden Teile schließen im Wesentlichen bündig zueinander ab, wobei geringfügige Höhenschwankungen für die erfindungsgemäße Ausführung hinnehmbar sind. Wie in der Fig. 6 gezeigt, kann durch die vollständig innenliegende Anordnung des Trägerelements 16, ein Teil des Aufnahmeraums 12 bzw. des Siebträgerkopfes 27 auf einer Oberfläche eines Grundelements 25, beispielsweise eine Holzplatte, abstützend aufliegen, wodurch eine Gegenlage erzeugt wird, die für die Anordnung des Gegenstandes 11 bzw. des Siebträgers 11 unterstützend wirkt.

In den Fig. 2a, Fig. 2b und Fig. 6 ist gezeigt, dass das Trägerelement 16 vorzugsweise korrespondierend zu dem Aufnahmeraum 12 des Gegenstandes 11 ausgebildet und eingerichtet ist, wobei die Grundfläche 19 des Trägerelements 16 im Wesentlichen der Fläche der Öffnung 20 der Kavität des Aufnahmeraums 12 entspricht. In einer weiteren bevorzugten - in den Figuren nicht gezeigten - Ausführungsform ist das Trägerelement 16 auch in der Höhe korrespondierenden zu der Tiefe des Aufnahmeraums 12 ausgebildet und eingerichtet.

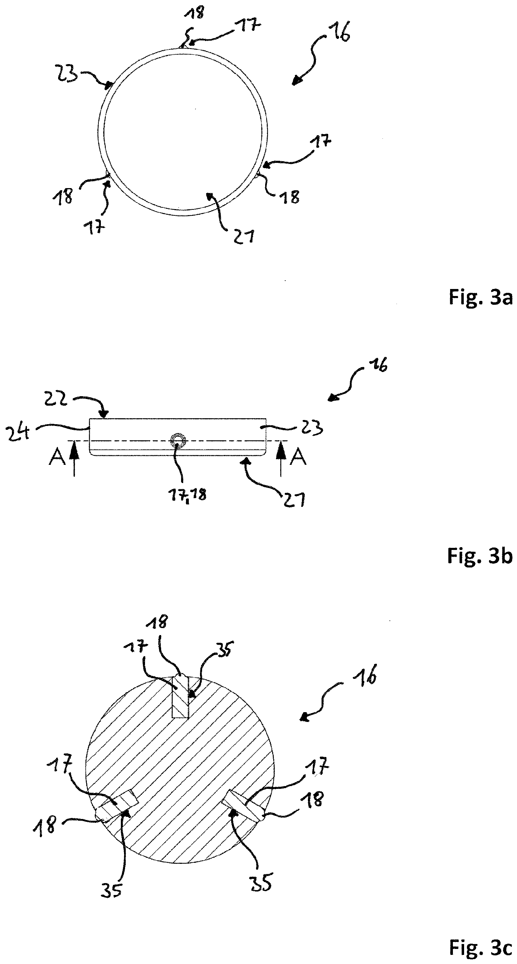

Das Trägerelement 16 ist bevorzugt puckförmig bzw. scheibenförmig ausgebildet, wie dies in den Fig. 3a bis Fig. 3c sowie in der Fig. 5 gezeigt ist, wobei das Trägerelement 16 eine Oberseite 21, eine Unterseite 22 und eine umlaufende Seitenwand 23 aufweist. Das mindestens eine Fixierelement 17 ist weiter bevorzugt in der Seitenwand 23 des Trägerelement 16 angeordnet, wie dies insbesondere aus der Fig. 3b und Fig. 5 ersichtlich ist. Besonders bevorzugt ist das mindestens eine Fixierelement 17 im Bereich des oberen Drittels bis mittig in der Höhe der Seitenwand 23 des Trägerelements 16 angeordnet; bei einer größeren Höhe des Trägerelements 16 kann in einer weiteren bevorzugten - in den Figuren nicht gezeigten Ausführungsform - das mindestens eine Fixierelement 17 auch im Bereich des unteren Viertels oder Drittels bis mittig in der Höhe in der Seitenwand 23 des Trägerelements 16 angeordnet sein. In einer weiteren bevorzugten Ausführung umfasst das Trägerelement 16 mindestens drei Fixierelemente 17, die vorzugsweise sternförmig in der Seitenwand 23 des Trägerelements 16 angeordnet sind. In dem Trägerelement 16 der Fig. 3a bis Fig. 3c sind genau drei Fixierelemente 17 sternförmig angeordnet, wobei die Fixierelemente 17 jeweils in Trägerelementöffnungen 35, vorzugsweise darin unlösbar befestigt, angeordnet sind. In einer weiteren bevorzugten und insbesondere in den Fig. 3a und Fig. 3b dargestellten Ausführungsform ist das mindestens eine Fixierelement 17 derart in der Seitenwand 23 angeordnet, dass der Arretierabschnitt 18 über die Oberfläche 24 der Seitenwand 23 hinausragt, was durch die Draufsicht der Fig. 3a verdeutlich wird. Je nach Größe des Aufnahmeraums 12 kann es zweckdienlich sein, dass noch ein weiterer - in den Figuren nicht dargestellter - Abschnitt des Fixierelements 17 über die Oberfläche 24 der Seitenwand 23 des Trägerelements hinausragt.

Gemäß Fig. 5 und Fig. 6 umfasst die Haltevorrichtung 10 vorzugsweise ein Grundelement 25, das zur Befestigung mit dem Trägerelement 16 ausgebildet und eingerichtet ist. Das Grundelement 25 ist gemäß Fig. 6 weiter bevorzugt ausreichend groß gewählt, dass der auf der Haltevorrichtung 10 anzuordnende Gegenstand 11 mit seiner Auflagefläche des Aufnahmeraums 12 vollständig anliegen kann. Die Befestigung zwischen dem Grundelement 25 und dem Trägerelement 16 ist bevorzugt mittels einer lösbaren und/oder einer nicht lösbaren Verbindung gebildet, vorzugsweise ausgewählt aus einer Magnetverbindung, wobei das Grundelement 25 und/oder das Trägerelement 16 einen Magneten 26 umfasst/umfassen, einer Schraubverbindung, einer Klebeverbindung, einer Nut-Feder-Verbindung, einer Klettverbindung und/oder einer stoffschlüssigen Verbindung. In der Fig. 6 liegt die Befestigung zwischen dem Grundelement 25 und dem Trägerelement 16 als Magnetverbindung vor, indem jeweils das Grundelement 25 und das Trägerelement 16 einen Magneten 26 umfassen. In der bevorzugten Ausführungsform der Fig. 6 ist der Magnet 26 unterhalb der Oberfläche des Grundelements 25 angeordnet, damit bei einem Lösen des Trägerelements 16 von dem Grundelement 25 der Magnet 26 des Grundelements 25 nicht einsehbar ist. In besonders bevorzugten Ausführungsformen ist der Magnet 26 innerhalb des Grundelements 25 und/oder des Trägerelements 16 innenliegend und von außen nicht einsehbar angeordnet. Bei der Anordnung des Gegenstandes 11 auf dem Trägerelement 16 mittels des mindestens einen Fixierelements 17 wirkt vorzugsweise eine Haltekraft, wobei die Haltekraft geringer ist als die auftretende Kraft bei der Befestigung zwischen dem Grundelement 25 und dem Trägerelement 16. Beim Lösen des Gegenstandes 11 von der Haltevorrichtung 10 verbleibt somit das Trägerelement 16 auf dem Grundelement 25 und wird nicht unbeabsichtigter Weise abgelöst.

Gemäß Fig. 2b ist die mindestens eine Rastausnehmung 15 vorzugsweise in der umlaufenden Seitenwand 14 beabstandet von der Öffnung 20 der Kavität kanalförmig ausgebildet und eingerichtet, wobei die kanalförmige Rastausnehmung 15 vorzugsweise um den gesamten Umfang der Seitenwand 14 verläuft, besonders bevorzugt im Wesentlichen parallel zum Aufnahmeboden 13. Der Querschnitt der Rastausnehmung 15 ist vorzugsweise halbkreisförmig ausgebildet, es können jedoch auch drei-, vier- oder mehreckige Ausnehmungen im Querschnitt für einen Eingriff mit mindestens einem Fixierelement 17 vorgesehen sein.

Vorzugsweise ist das Trägerelement 16 bei der Anordnung auf dem Grundelement 25 relativ zum Grundelement 25 verschwenkbar befestigt angeordnet. Ausgehend von der Fig. 6 ist somit der Gegenstand 11 bzw. der Siebträger 11 um das Grundelement 25 rotierbar. Dazu bieten die Magneten 26 eine ausreichende Haltekraft zwischen Trägerelement 16 und Grundelement 25 und die Fixierelemente 17 bieten eine ausreichende Kraft zur Halterung des Siebträgers 11. Aufgrund der Beschaffenheit der Magneten 26 können diese zuverlässig zueinander verdreht werden, wodurch die Rotation des Siebträgers 11 ausbildbar ist. Vorzugsweise verschwenkt der Siebträger 11 bei einer Anordnung auf der Haltevorrichtung 10 selbsttätig in die Vertikale.

In der Fig. 6 ist eine bevorzugte Ausführungsform einer Anordnung 100 dargestellt, umfassend eine Haltevorrichtung 10 und einen Gegenstand 11, insbesondere einen Siebträger 11 von Espressomaschinen, wobei der Gegenstand 11 einen eine Kavität aufweisenden Aufnahmeraum 12 mit einem Aufnahmeboden 13 und mindestens eine den Aufnahmeboden 13 umlaufende Seitenwand 14 mit mindestens einer Rastausnehmung 15 umfasst, wobei der Gegenstand 11 zum Herstellen einer lösbaren Verbindung mit der erfindungsgemäßen Haltevorrichtung 10 ausgebildet und eingerichtet ist.

## Patentansprüche

1. Haltevorrichtung (10) zur Halterung von Gegenständen (11), insbesondere von Siebträgern (11) von Espressomaschinen, wobei der Gegenstand (11) einen eine Kavität aufweisenden Aufnahmeraum (12) mit einem Aufnahmeboden (13) und mindestens eine den Aufnahmeboden (13) umlaufende Seitenwand (14) mit mindestens einer Rastausnehmung (15) umfasst,
**dadurch gekennzeichnet, dass**
die Haltevorrichtung (10) ein Trägerelement (16) mit mindestens einem Fixierelement (17) umfasst, ausgebildet und eingerichtet in die mindestens eine Rastausnehmung (15) des Aufnahmeraums (12) lösbar einzugreifen, um den Gegenstand (11) an dem Trägerelement (16) lösbar anzuordnen.

2. Haltevorrichtung (10) nach Anspruch 1, **dadurch gekennzeichnet, dass** das mindestens eine Fixierelement (17) einen Arretierabschnitt (18) umfasst, der beim lösbaren Eingriff in der mindestens einen Rastausnehmung (15) anliegt.

3. Haltevorrichtung (10) nach Anspruch 2, **dadurch gekennzeichnet, dass** das mindestens eine Fixierelement (10) ein Federelement umfasst, das den Arretierabschnitt (18) federnd lagert, wobei der Arretierabschnitt (18) gegen eine Federkraft vorgespannt ist.

4. Haltevorrichtung (10) nach einem oder mehreren der Ansprüche 1 bis 3, **dadurch gekennzeichnet, dass** das Trägerelement (16) innenliegend in dem Aufnahmeraum (12) des Gegenstandes (11) anordenbar ist, vorzugsweise vollständig innenliegend in dem Aufnahmeraum (12) anordenbar ist.

5. Haltevorrichtung (10) nach einem oder mehreren der Ansprüche 1 bis 4, **dadurch gekennzeichnet, dass** das Trägerelement (16) korrespondierend zu dem Aufnahmeraum (12) des Gegenstandes (11) ausgebildet und eingerichtet ist, wobei die Grundfläche (19) des Trägerelements (16) im Wesentlichen der Fläche der Öffnung (20) der Kavität des Aufnahmeraums (12) entspricht.

6. Haltevorrichtung (10) nach einem oder mehreren der Ansprüche 1 bis 5, **dadurch gekennzeichnet, dass** das Trägerelement (16) puckförmig ausgebildet ist, wobei das Trägerelement (16) eine Oberseite (21), eine Unterseite (22) und eine umlaufende Seitenwand (23) aufweist, wobei das mindestens eine Fixierelement (17) in der Seitenwand (23) des Trägerelement (16) angeordnet ist.

7. Haltevorrichtung (10) nach einem oder mehreren der Ansprüche 1 bis 6, **dadurch gekennzeichnet, dass** das Trägerelement (16) mindestens drei Fixierelemente (17) umfasst, vorzugsweise sternförmig in der Seitenwand (23) des Trägerelements (16) angeordnet.

8. Haltevorrichtung (10) nach einem oder mehreren der Ansprüche 1 bis 7, **dadurch gekennzeichnet, dass** das mindestens eine Fixierelement (17) derart in der Seitenwand (23) angeordnet ist, dass der Arretierabschnitt (18) über die Oberfläche (24) der Seitenwand (23) hinausragt.

9. Haltevorrichtung (10) nach einem oder mehreren der Ansprüche 1 bis 8, **dadurch gekennzeichnet, dass** die Haltevorrichtung (10) ein Grundelement (25) umfasst, das zur Befestigung mit dem Trägerelement (16) ausgebildet und eingerichtet ist.

10. Haltevorrichtung (10) nach Anspruch 9, **dadurch gekennzeichnet, dass** die Befestigung zwischen dem Grundelement (25) und dem Trägerelement (16) mittels einer lösbaren und/oder einer nicht lösbaren Verbindung gebildet ist, vorzugsweise ausgewählt aus einer Magnetverbindung, wobei das Grundelement (25) und/oder das Trägerelement (16) einen Magneten (26) umfasst, einer Schraubverbindung, einer Klebeverbindung, einer Nut-Feder-Verbindung, einer Klettverbindung und/oder einer stoffschlüssigen Verbindung.

11. Haltevorrichtung (10) nach einem oder mehreren der Ansprüche 1 bis 10, **dadurch gekennzeichnet, dass** die mindestens eine Rastausnehmung (15) in der umlaufenden Seitenwand (14) beabstandet von der Öffnung (20) der Kavität kanalförmig ausgebildet und eingerichtet ist, wobei die kanalförmige Rastausnehmung (15) vorzugsweise um den gesamten Umfang der Seitenwand (14) verläuft, besonders bevorzugt im Wesentlichen parallel zum Aufnahmeboden (13).

12. Haltevorrichtung (10) nach Anspruch 3, **dadurch gekennzeichnet, dass** bei der Anordnung des Gegenstandes (11) auf dem Trägerelement (16) das mindestens eine Fixierelement (17) in die mindestens eine Rastausnehmung (15) eingreift, wobei das mindestens eine Fixierelement (17) eine Längenänderung erfährt, indem sich das Federelement ausgehend von der Öffnung (20) der Kavität über die Seitenwand (14) des Aufnahmeraums (12) zusammendrückt und bei Eindringen in die mindestens eine Rastausnehmung (15) entspannt.

13. Haltevorrichtung (10) nach einem oder mehreren der Ansprüche 1 bis 12, **dadurch gekennzeichnet, dass** das mindestens eine Fixierelement (17) als ein Federdruckstück (17) oder eine federnd gelagerte Kugel ausgebildet und eingerichtet ist, das oder die in die mindestens eine Rastausnehmung (15) gedrückt wird.

14. Haltevorrichtung (10) nach einem oder mehreren der Ansprüche 9 bis 13, **dadurch gekennzeichnet, dass** bei der Anordnung des Gegenstandes (11) auf dem Trägerelement (16) mittels des mindestens einen Fixierelements (17) eine Haltekraft wirkt, wobei die Haltekraft geringer ist, als die auftretende Kraft bei der Befestigung zwischen dem Grundelement (25) und dem Trägerelement (16).

15. Haltevorrichtung (10) nach einem oder mehreren der Ansprüche 9 bis 14, **dadurch gekennzeichnet, dass** das Trägerelement (16) bei der Anordnung auf dem Grundelement (25) relativ zum Grundelement (25) verschwenkbar befestigt angeordnet ist.

16. Anordnung (100) umfassend eine Haltevorrichtung (10) und einen Gegenstand (11), insbesondere einen Siebträger (11) von Espressomaschinen, wobei der Gegenstand (11) einen eine Kavität aufweisenden Aufnahmeraum (12) mit einem Aufnahmeboden (13) und mindestens eine den Aufnahmeboden (13) umlaufende Seitenwand (14) mit mindestens einer Rastausnehmung (15) umfasst, wobei der Gegenstand (11) zum Herstellen einer lösbaren Verbindung mit der Haltevorrichtung (10) ausgebildet und eingerichtet ist, **dadurch gekennzeichnet, dass** die Haltevorrichtung (10) nach einem oder mehreren der Ansprüche 1 bis 15 ausgebildet ist.
